# EUROPEAN PATENT SPECIFICATION

(11) **EP 3 884 619 B1**
(45) Date of publication and mention of the grant of the patent: **01.01.2025**
(21) Application number: 19809923.6
(22) Date of filing: 21.11.2019
(51) Int. Cl.: H04L 41/0654, H04L 67/1097, H04L 67/142, H04L 67/146, H04L 67/148

(54) **N+1 REDUNDANCY FOR VIRTUALIZED SERVICES WITH LOW LATENCY FAIL-OVER**
N+1-REDUNDANZ FÜR VIRTUALISIERTE DIENSTE MIT NIEDRIGLATENZAUSFALLSICHERUNG
REDONDANCE N + 1 POUR SERVICES VIRTUALISÉS AVEC BASCULEMENT À FAIBLE LATENCE

(30) Priority: 21.11.2018 US 201862770550 P; 13.12.2018 US 201862779313 P
(43) Date of publication of application: 29.09.2021
(73) Proprietor: Telefonaktiebolaget LM Ericsson (publ), 164 83 Stockholm (SE)
(72) Inventor: CSÁSZÁR, András, 2089 Telki (HU); FIEDLER, Dietmar, 02400 Kirkkonummi (FI); GÉHBERGER, Dániel, Montréal QC H3W 2H5 (CA); MÁTRAY, Péter, 1024 Budapest (HU); NAGY, Mate Imre, 1121 Budapest (HU); NÉMETH, Gábor, 1146 Budapest (HU); PINCZEL, Balázs, 1222 Budapest (HU)
(74) Representative: Ericsson
(86) International application number: PCT/IB2019/060037
(87) International publication number: WO 2020/104992

(56) References cited:
- US-A1- 2006 153 064
- US-A1- 2006 294 241
- US-A1- 2006 294 241
- US-A1- 2006 294 241
- US-A1- 2008 151 892
- US-A1- 2008 151 892
- US-A1- 2009 254 775
- US-A1- 2009 254 775
- US-A1- 2009 254 775
- US-A1- 2013 107 872
- US-A1- 2013 107 872
- US-A1- 2013 107 872
- US-B1- 7 716 274

## Description

### RELATED APPLICATIONS

This application claims priority to U.S. Provisional Application No. 62/779313 filed 13 December 2018 and U.S. Provisional Application No. 62/770550 filed 21 November 2018.

### TECHNICAL FIELD

The present disclosure relates generally to failure protection for communication networks and, more particularly, to a N+1 redundancy scheme for virtualized services with low latency fail-over.

### BACKGROUND

There are two main failure protection schemes for maintaining continuity of service in the event that a network node in a communication network responsible for handling user traffic fails. The two main protection schemes are 1+1 protection and N+1 protection. With 1+1 protection, N standby nodes are available for N network nodes to take over the function of a failed primary node or nodes. In 1+1 protection schemes, each network node has its own dedicated standby node, which can take over traffic currently being handled by its corresponding network node without loss of sessions. This is known as "hot standby." One drawback of 1+1 protection is that it requires doubling of system resources. With N+1 protection, 1 standby node is available for N network nodes to take over the function of a single failed primary node. However, the N+1 redundancy scheme typically provides only "cold standby" protection so that traffic handled by the failed network node is lost at a switchover." Existing N+1 solutions, don't preserve state of the failed primary node resulting in tear-down of existing sessions. This is because the standby node is not dedicated to any specific one of the N primary nodes, so there was no solution on how to have the state of any one of the primary nodes available in the backup node after the failure. Ultimately, the only benefit is that capacity will not drop after a failure but it does not provide protection for ongoing sessions.

In case of Virtual Router Redundancy Protocol (VRRP)-based solutions, a standby node may take over the Internet Protocol (IP) address of a failed primary node as well as the functions of the failed primary node, but these solutions do not take over real-time state of the failed primary node that would be needed for preserving session continuity for sockets. Moreover, the operator of the network has to configure separate VRRP sessions with separate IP addresses for each VRRP relationship (i.e., the standby nodes need a separate VRRP context per each primary node it is deemed to protect). This way the configuration overhead in a bigger cluster makes the solution cumbersome.

Document US 2006/294241 A1 may be construed to disclose a radio network controller and methods for reestablishing sessions in a wireless network. At least a portion of session information associated with a first session is saved; and in response to detecting an unexpected degradation of the first session, reestablishment of the first session is triggered using the portion of the session information.

### SUMMARY

The present disclosure comprises methods and apparatus of providing N+1 redundancy for a cluster of network nodes including a standby node and a plurality of primary nodes. When the standby node determines that a primary node in a cluster has failed, the standby node configures the standby node to use an IP address of the failed primary node. The standby node further retrieves session data for user sessions associated with the failed primary node from a low latency database for the cluster and restores the user sessions at the standby node. When the user sessions are restored, the standby node switches from a standby mode to an active mode.

According to the disclosure, there are provided a method, a network node and a non-transitory computer-readable storage media according to the independent claims. Further developments are set forth in the dependent claims.

A first aspect of the disclosure comprises methods of providing N+1 redundancy for a cluster of network nodes. In one embodiment, the method comprises determining, by a standby node, that a primary node in a cluster has failed, configuring the standby node to use an IP address of the failed primary node, retrieving session data for user sessions associated with the failed primary node from a low latency database for the cluster, restoring the user sessions at the standby node, and switching from a standby mode to an active mode.

A second aspect of the disclosure comprise a network node configured as a standby node to provide N+1 protection for a cluster of network nodes including the standby node and a plurality of primary nodes. The standby node comprises a network interface for communicating over a communication network and a processing circuit. The processing circuit is configured to determine that a primary node in a cluster has failed. Responsive to determining that a primary node has failed, the processing circuit configures the standby node to use an IP address of the failed primary node. The processing circuit is further configured to retrieve session data for user sessions associated with the failed primary node from a low latency database for the cluster and restore the user sessions at the standby node. After the user sessions are restored, the processing circuit switches the standby node from a standby mode to an active mode.

A third aspect of the disclosure comprises a computer program comprising executable instructions that, when executed by a processing circuit in a redundancy controller in a network node, causes the redundancy controller to perform the method according to the first aspect.

### BRIEF DESCRIPTION OF THE DRAWINGS

Figure 1 illustrates a server cluster with N+1 redundancy protection.
Figure 2 graphically illustrates a fail-over.
Figure 3 illustrates a fail-over procedure according to a first embodiment.
Figure 4 illustrates a fail-over procedure according to a second embodiment.
Figure 5 illustrates an exemplary fail-over method implemented by a standby node.
Figure 6 illustrates an exemplary recovery method implemented by a primary node.
Figure 7 illustrates an exemplary network node.

### DETAILED DESCRIPTION

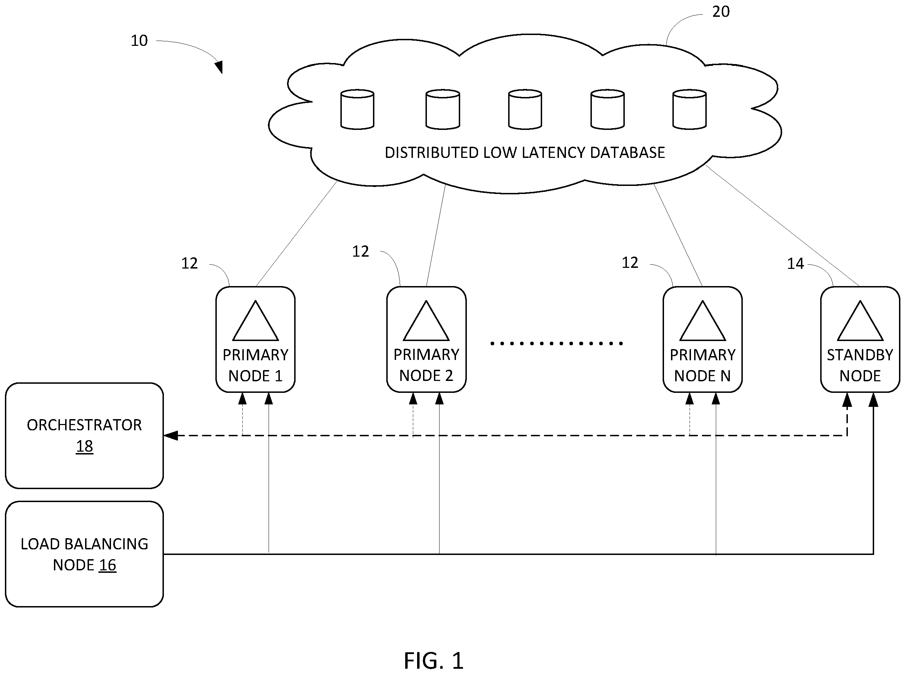

Referring now to the drawings, Figure 1 illustrates a server cluster 10 with N+1 redundancy protection that implements a virtual network function (VNF), such as a media gateway (MGW) function or Border Gateway Function (BGF). The server cluster 10 can be used, for example, in a communication network, such as an Internet Protocol Multimedia Subsystem (IMS) network or other telecom network. The server cluster 10 comprises a plurality of network nodes, which include a plurality of primary nodes 12 for handling user sessions and a standby node 14 providing N+1 protection in the event that a primary node 12 fails. Each of the network nodes 12, 14 in the cluster 10 can be implemented by dedicated hardware and processing resources. Alternatively, the network nodes 12, 14 can be implemented as virtual machines (VMs) using shared hardware and processing resources.

User sessions (e.g., telephone calls, media streams, etc.) are distributed among the primary nodes 12 by a load balancing node 16. An orchestrator 18 manages the server cluster 10. A distributed, low-latency database 20 serves as a data store for the cluster 10 to store the states of the user sessions being handled by the primary nodes 12 as hereinafter described. An exemplary distributed database 20 is described in an article titled "DAL: A Locality-Optimizing Distributed Shared Memory System" by Gabor Nemeth, Daniel Gehberger and Peter Matray. (Németh, Gábor, Dániel Géhberger, and Péter Mátray. "{DAL}: A Locality-Optimizing Distributed Shared Memory System." 9th {USENIX} Workshop on Hot Topics in Cloud Computing (HotCloud 17). Santa Clara, CA - July 10 - 11, 2017)*.*

The network nodes 12, 14 are part of the same subnet with a common IP prefix. Each user session is associated with a particular IP address, which identifies the primary node 12 that handles user traffic for the user session. State information for the user sessions is stored in a distributed, low latency, database 20 that serves the server cluster 10. In the event that a primary node 12 fails, the standby node 14 can retrieve the state information of user sessions handled by the failed primary node 12 and restore the "lost" user sessions so that service continuity is maintained for the user sessions.

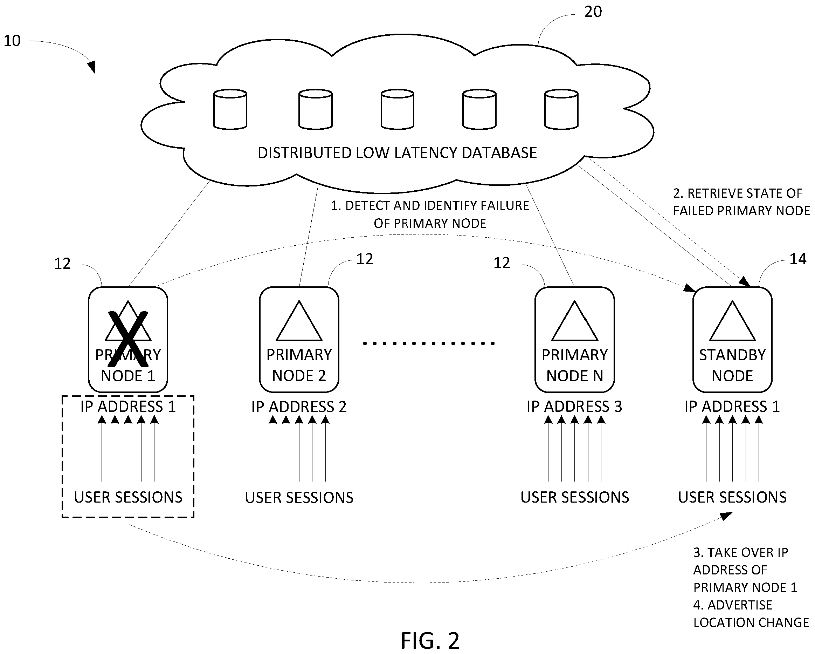

Figure 2 shows the server cluster 10 of Figure 1 in simplified form to graphically illustrates the basic steps of a fail-over procedure. It is assumed in Figure 2 that Primary Node 1 has failed. At 1, the failure is detected by the standby node 14 and the failed primary node 12 is identified. At 2, the standby node retrieves the state information for Primary Node 1 from the database 20 and recreates the user sessions at the standby node 14. At 3, the standby node takes over the IP address of Primary Node 1 and configures its network interface to use the IP address. At 4, the standby node advertises the location change of the IP address. Thereafter, the traffic for user sessions associated with IP Address 1 will be routed to the standby node 14 rather than to Primary Node 1.

The failure protection scheme used in the present disclosure can be viewed as having three separate phases. In a first phase, referred to as the preparation phase, a redundant system is built so that the system is prepared for failure of a primary node 12. The second phase comprises a fail-over process in which the standby node 14, upon detecting a failure of then primary node 12, takes over the active user sessions handled by the failed primary node 12. After the fail-over process is complete, a post-failure process restores capacity and redundancy to the system that is lost by the failure of the primary node 12 so that backup protection is re-established to protect against future network node failures.

During the preparation phase, state information necessary to restore the user sessions is externalized and stored in the database 20 by each primary node 12. Conventional log-based approaches or checkpointing can be used to externalize the state information. Another suitable method of externalizing state information is described in co-pending application 62/770,550 titled "Fast Session Restoration of Latency Sensitive Middleboxes" filed on November 21, 2018. Necessary data to be stored in the database 20 is dependent on the application and the communication protocol used in the application. For TCP sessions, such state information may comprise port numbers, counters, sequence numbers, various data on Transport Control Protocol (TCP) buffer windows, etc. Generally, all state information that is necessary to continue the user session should be stored externally.

In order to ensure that a backup is readily available to replace a primary node 12 that has failed, a "warm" standby node 14 is provisioned and made available to take over any user sessions for a failed primary node 12. During the provisioning, system checks are performed to ensure that:
- the image of the standby node 14 is booted;
- the operating system for the standby node 14 is up and running;
- the standby node 14 has a live connection to the database 20; and
- the standby node 14 shares the same configuration as the other instances and is connected to the same next-hop routers.

It is not known in advance which of the primary nodes 12 will fail, however, the standby node 14 is ready to fetch necessary state information from the database 20 to take over for any one of the primary nodes 12. This standby mode is referred to herein a "warm" standby.

The fail-over process is triggered by the failure of one of the primary nodes 12. In some embodiments, failure is detected by the standby node 12 based on a "heartbeat" or "keepalive" signaling. In some embodiments, the primary nodes 12 may periodically transmit a "heartbeat" signal and a failure is detected when the heartbeat signal is not received by the standby node 14. In other embodiments, the standby node 14 may periodically transmit a "keepalive" signal or "ping" message to each of the primary nodes 12. In this case, a failure is detected when a primary node 12 fails to respond. This "keepalive" signaling process should be continuously run pairwise between the standby node 14 and each primary node 12.

In other embodiments, the failure of a primary node 12 can be detected by another network entity and communicated to the standby node 14 in the form of a failure notification. For example, one primary node 12 may detect the failure of another primary node 12 and send a failure notification to the standby node 14. In another embodiment, the database 20 may detect the failure of a primary node 12 and send a failure notification to the standby node 14.

When a fail-over is triggered, the standby node 14 retrieves the IP address or addresses of the failed primary node 12, as well as the session states (e.g., application and protocol dependent context data) necessary to re-initiate the user sessions at the standby node 14. In some embodiments, the standby node 14 writes the network identify (e.g., IP address) of the failed primary node 12 into a global key called STDBY-IDENTITY, which is stored in the database 20 so that all nodes in the server cluster 10 are aware that the standby node 14 has assumed the role of the failed primary node 12. Responsive to the failure detection or failure indication, the standby node 14 configures its network interface to use the IP address or addresses of the failed primary node 12 and loads the retrieved session states into its own tables. When the standby node 14 is ready to take over, the standby node 14 broadcasts a Gratuitous Address Resolution Protocol (GARP) message with its own Medium Access Control (MAC) address and its newly configured IP address(es), so that the routers in the subnet know to forward packets with the IP address(es) formerly used by the failed primary node 12 to the standby node's MAC address. The same general principles also apply to Internet Protocol version 6 (IPv6) interfaces (Unsolicited Neighbor Advertisement message).

During the post-failure phase, the original capacity of the server cluster 10 with N primary nodes 12 and 1 standby node 14 is restored. There are essentially two alternative approaches to restoring the system capacity.

In a first approach for the post-failure phase, the standby node 14 switches from a standby mode to an active mode and serves only temporarily as a primary node, reverting to a "warm" standby mode when done. The standby node 14 serves only the user sessions that were taken over from the failed primary node 12 and is not assigned to handle any new user sessions by the load balancing node 16. When the orchestrator 18 learns about the failure of a primary node 12, it re-establishes a new primary node 12 to replace the failed primary node 12 and restore system capacity according to a regular scale-out procedure. The orchestrator 18 should ensure that the IP addresses used by the failed primary node 12 on the user plane are reserved, because these addresses are taken over by the standby node 14. In case of an OpenStack-based orchestrator 18, reserving the IP addresses means that the "ports" should not be deleted when the failed primary node 12 disappears. This requires, however, garbage collection. The standby node 14, when it terminates, sends a trigger to the orchestrator 18 indicating that the ports used by the affected IP addresses can be deleted. After this notification, the IP addresses can be assigned to new network nodes (e.g., VNFs).

During the post-failure phase, the operation of the load balancing node 18 needs to take into account the failed primary node 12. Immediately after the failure, however, the load balancing node 18 does not assign new incoming sessions to either the failed primary node 12 or the standby node 14. As noted above, the standby node 14 continues serving existing user sessions taken over from the failed primary node 12, but does not receive new sessions. After the last session is finished at the standby node 14, or upon expiration of a timer (MAX_STANDBY_LIFETIME), the standby node 14 erases or clears the STDBY_IDENTITY field in the database 20, sends a notification to the orchestrator 18 indicating that the IP addresses of X can be released, and transitions back to a "warm" standby mode. The MAX_STANDBY_LIFETIME timer, if used, is started when the standby node 14 takes over for the failed primary node 12.

In a second approach for the post-failure phase, the standby node 14 permanently assumes the role of the failed primary node 12 and the orchestrator re-establishes system capacity by initiating a new standby node 14. In this case, The standby node 14 sends a notification message or other indication to the orchestrator 18 indicating that the IP address(es) of the failed primary node 12 were assumed or taken over by the standby node 14 so that the orchestrator 18 knows (i) to which primary node 12 the IP addresses belong, and (ii) that these IP addresses cannot be used for new instances of the primary nodes 12 in case of a scale-out. The standby node 14 (now fully a primary node 12) triggers the orchestrator 18 to launch a new instance for the standby node 14 to restore the original redundancy protection.

There may be circumstance where primary node 12 fails only temporarily, typically because of a VM reboot. Following the restart, the primary node 12 may try to use its earlier IP address(es), which would cause a conflict with the standby node 14 that is serving the ongoing user sessions associated with those addresses. Before restarting, the primary node reads the STDBY_IDENTITY key in the database 20. If the STDBY_IDENTITY key matches the identity of the primary node 12, the primary node 12 pauses and waits until the key is erased, indicating that the IP address used by the standby node has been released, or asks for new configuration parameters from the orchestrator 18.

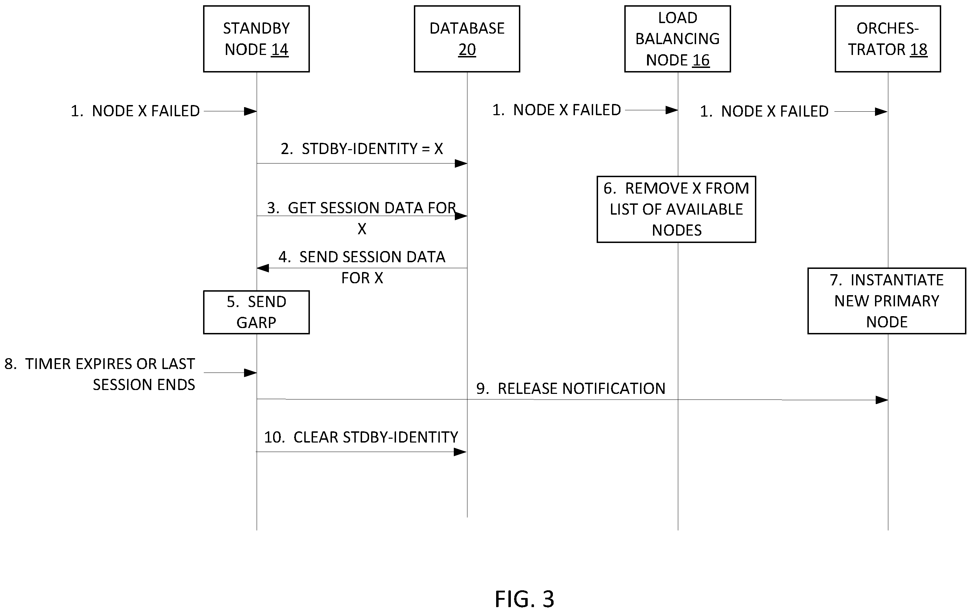

Figure 3 illustrates an exemplary fail-over procedure used in some embodiments of the present disclosure. When the standby node 14 detects a node failure or receives a failure notification (step 1), it writes the network identity (e.g., IP address) of the failed primary node 12 into the global key STDBY-IDENTITY stored in database 20 (step 2). The standby node 14 sends a GET message to the database 20 to request session information for the failed primary node 12 (step 3). In response to the GET message, the database 20 sends the session data for the failed primary node 12 to the standby node 14 (step 4). As previously described, the standby node 14 configures its network interface to use the IP address of the failed primary node 12 and broadcasts a GARP message to the network (step 5). Upon broadcast of the GARP message, the routers in the network will route messages previously sent to the failed primary node 12 to the standby node 14 and the standby node 14 will handle the user sessions of the failed primary node 12. When the load balancing node 16 is notified of the failure of a primary node 12, the load balancing node 16 removes the primary node 12 from its list of primary nodes 12 so that no new sessions will be assigned to the failed primary node 12 (step 6). Also, when the orchestrator 18 is notified of the failure of a primary node 12, the orchestrator 18 instantiates a new instance of the primary node 12 to replace the failed primary node 12 (step 7).

In the embodiment shown in Figure 3, it is assumed that the standby node 14 is only temporarily active and reverts to a standby mode when a standby timer expires or after the last session assumed by the standby node 14 ends. In this case, when the standby timer expires (step 8), or when the last user session ends, the standby node 14 sends a release notification message to the orchestrater 18 to release the IP address assumed by the standby node 14, so that the IP address is available for reassignment (step 9). The standby node 14 also clears the standby identity key stored in the database 20 (step 10).

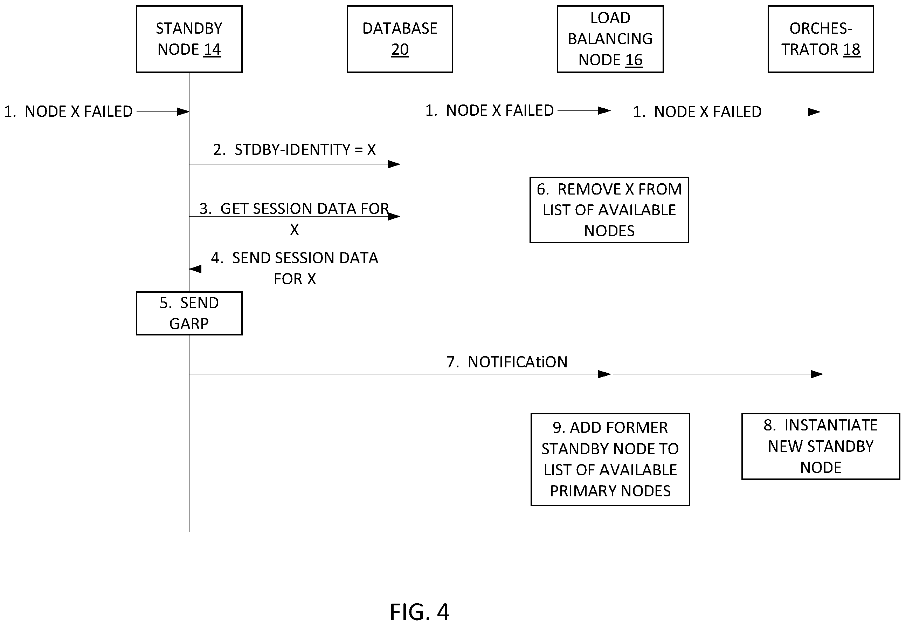

Figure 4 illustrates another exemplary fail-over procedure used in some embodiments of the present disclosure where the standby 14 permanently replaces the failed primary node 12. Steps 1-6 are the same as the fail-over procedure shown in Figure 3. After becoming active, the standby node 14 sends a notification message to the orchestrator 18 and/or load balancing node 16 to notify the orchestrator 18 and/or load balancing node 16 that it taken over the IP address of the failed primary node 12 (step 7). The orchestrator 18 then instantiates a new instance of a standby node 14 to replace the previous standby node 14 (step 8). In some embodiments, the orchestrator 18 may notify the load balancing node 16 that the standby node 18 is now designated as a primary node 12. The load balancing node 16 adds the standby node 14 to its list of available primary nodes 12 in response to the notification from the standby node 14 or orchestrator 18 (step 9).

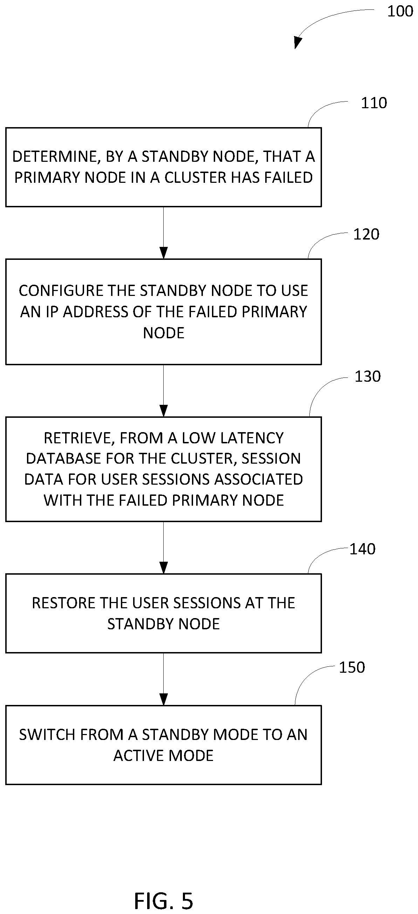

Figure 5 illustrates an exemplary method 100 implemented by a standby node 14 in a server cluster 10 including a plurality of primary nodes 12. When the standby node 14 determines that a primary node 12 in a cluster 10 has failed (block 110), the standby node 12 configures its network interface to use an IP address of the failed primary node 12 (block 120). The standby node 14 further retrieves from a low latency database for the cluster, session data for user sessions associated with the failed primary node 12 (block 130) and restores the user sessions at the standby node 14 (block 140). When the user sessions are restored, the standby node 14 switches from a standby mode to an active mode (block 150).

In some embodiments of the method 100, determining that a primary node 12 in a cluster 10 has failed comprises sending a periodic keepalive message to one or more primary nodes 12 in the cluster 10, and determining a node failure when the failed primary node 12 fails to response to a keepalive message.

In some embodiments of the method 100, determining that a primary node 12 in a cluster has failed comprises receiving a failure notification. As an example, the failure notification can be received from the database 20.

In some embodiments of the method 100, configuring the standby node 14 to use an IP address of the failed primary node 12 comprises configuring a network interface to use the IP address of the failed primary node 12.

In some embodiments of the method 100, configuring the standby node 14 to use an IP address of the failed primary node 12 further comprises announcing a binding between the IP address and a MAC address of the standby node 14.

Some embodiments of the method 100 further comprise setting a standby identity key in the database to an identity of the failed primary node 12.

Some embodiments of the method 100 further comprise, after a last one of the user sessions ends, releasing the IP address of the failed primary node 12 and switching from the active mode to the standby mode.

Some embodiments of the method 100 further comprise, after a last one of the user sessions ends, clearing the standby identity key in the database 20.

Some embodiments of the method 100 further comprise notifying an orchestrator 18 that the standby node 14 has replaced the failed primary node 12 and receiving new user sessions from a load-balancing node 16.

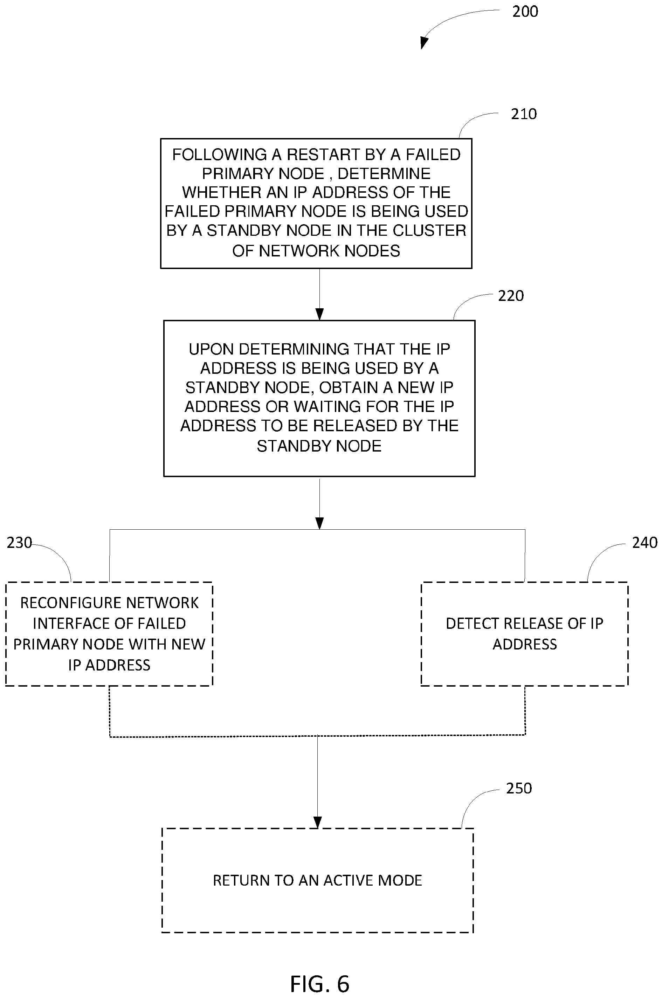

Figure 6 illustrates an exemplary method 200 of failure recovery implemented by a primary node 12 in a cluster 10 of network nodes following a temporary failure of the primary node 12. Following a restart by the primary node 12, the primary node 12 determines whether an IP address of the primary node 12 is being used by a standby node 14 in the cluster 10 of network nodes (block 210). Upon determining that the IP address is being used by a standby node 14, the primary node 12 obtains a new IP address or waits for the IP address to be released by the standby node 14 (block 220). In the former case, the primary node 12 reconfigures its network interface with the new IP address and returns to an active mode (block 230, 250). In the latter case, the primary node 12 detects release of the IP address by the standby node 14 (block 240) and, responsive to such detection, returns to an active mode (block 250)

The primary node 12 determines whether an IP address of the primary node 12 is being used by a standby node 14 in the cluster 10 of network nodes by getting a standby identity from a database 20 serving the cluster 10 of network nodes, and comparing the standby identity to an identity of the primary node 12.

The primary node 12 determines when the IP address is released by monitoring the standby identity stored in the database 20 and determining that the IP address is released when the standby identity is cleared or erased.

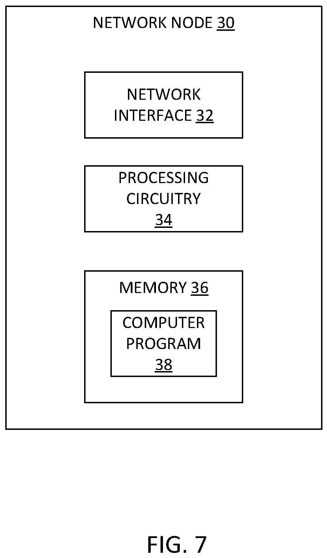

Figure 7 illustrates an exemplary network node 30 according to an embodiment. The network node 30 can be configured as a primary node 12 or as a standby node 14. The network node 30 includes a network interface 32 for sending and receiving messages over a communication network, a processing circuit 34, and memory 36 The processing circuit 34 may comprise one or more microcontrollers, microprocessors, hardware circuits, firmware, or a combination thereof. Memory 36 comprises both volatile and non-volatile memory for storing computer program code and data needed by the processing circuit 34 for operation. Memory 36 may comprise any tangible, non-transitory computer-readable storage medium for storing data including electronic, magnetic, optical, electromagnetic, or semiconductor data storage. Memory 36 stores a computer program 38 comprising executable instructions that configure the processing circuit 34 to implement the procedures and methods as herein described, including one or more of the methods 100, 200 shown in Figures 5 and 6. A computer program 38 in this regard may comprise one or more code modules corresponding to the means or units described above. In general, computer program instructions and configuration information are stored in a non-volatile memory, such as a ROM, erasable programmable read only memory (EPROM) or flash memory. Temporary data generated during operation may be stored in a volatile memory, such as a random access memory (RAM). In some embodiments, computer program 38 for configuring the processing circuit 34 as herein described may be stored in a removable memory, such as a portable compact disc, portable digital video disc, or other removable media. The computer program 38 may also be embodied in a carrier such as an electronic signal, optical signal, radio signal, or computer readable storage medium. In some embodiments, memory 38 stores virtualization code executed by the processing circuit 34 for implementing the network node 30 as a virtual machine.

Those skilled in the art will also appreciate that embodiments herein further include corresponding computer programs. A computer program comprises instructions which, when executed on at least one processor of an apparatus, cause the apparatus to carry out any of the respective processing described above. A computer program in this regard may comprise one or more code modules corresponding to the means or units described above.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

The methods and apparatus herein described enable provide N+1 redundancy for a cluster of network nodes including a standby node and a plurality of primary nodes. When a primary node in a cluster has failed, the user sessions can be restored at the standby node. When the user sessions are restored, the standby node switches from a standby mode to an active mode.

## Claims

1. A method (100) of providing N+1 redundancy for a cluster (10) of network nodes including a standby node (14, 30) and a plurality of primary nodes (12, 30), the method (100) being performed by the standby node (14, 30) and comprising:
determining (110), by the standby node (14, 30), that one of the primary nodes (12, 30) in the cluster (10) has failed;
configuring (120) the standby node (14, 30) to use an Internet Protocol, IP, address of the failed primary node (12, 30), comprising:
- configuring a network interface (32) of the standby node (14, 30) to use the IP address of the failed primary node (12, 30); and
- announcing a binding between the IP address and a Medium Access Control, MAC, address of the standby node (14, 30);
retrieving (130), from a low latency database (20) for the cluster (10), session data for user sessions associated with the failed primary node (12, 30);
restoring (140) the user sessions at the standby node (14, 30); and
switching (150) from a standby mode to an active mode.

2. The method (100) of claim 1 wherein:
determining (110) that a primary node (12, 30) in a cluster (10) has failed comprises sending a periodic keepalive message to one or more primary nodes (12, 30) in the cluster (10); and determining a node failure when the failed primary node (12, 30) fails to respond to a keepalive message.

3. The method (100) of claim 1 wherein:
determining (110) that a primary node (12, 30) in a cluster (10) has failed comprises receiving a failure notification.

4. The method (100) of claim 3, wherein the failure notification is received from the external database (20).

5. The method (100) of any one of claims 1 to 4 further comprising setting a standby identity key in the database (20) to an identity of the failed primary node (12, 30).

6. The method (100) of any one of claims 1 to 5 further comprising:
after a last one of the user sessions ends: releasing the IP address of the failed primary node (12, 30); and switching from the active mode to the standby mode; or
upon expiration of a standby timer: releasing the IP address of the failed primary node (12, 30); and switching from the active mode to the standby mode.

7. The method (100) of any one of claims 1 to 5 further comprising:
notifying an orchestrator (18) that the standby node (14, 30) has replaced the failed primary node (12, 30); and receiving new user sessions from a load-balancing node (916).

8. The method (100) of claim 6, further comprising, after a last one of the user sessions ends or upon expiration of a standby timer, clearing the standby identity key in the database (20).

9. A network node (14, 30) providing N+1 protection for a plurality of primary nodes (12, 30) in a cluster (10) including a standby node (14, 30) and a plurality of primary nodes (12, 30), the network node (14, 30) being the standby node (14, 30) and comprising:
a network interface (32) configured to perform all steps of a method according to any one of claims 1 to 8.

10. A non-transitory computer-readable storage medium containing a computer program comprising executable instructions that, when executed by a processing circuit (34) in a network node of a mobile network causes the network node to perform any one of the methods of claims 1 to 8.

## Patentansprüche

1. Verfahren (100) zur Bereitstellung von N+1-Redundanz für einen Cluster (10) von Netzwerkknoten, der einen Standby-Knoten (14, 30) und eine Mehrzahl von primären Knoten (12, 30) umfasst, wobei das Verfahren (100) vom Standby-Knoten (14, 30) durchgeführt wird und umfasst:
Bestimmen (110) durch den Standby-Knoten (14, 30), dass einer der primären Knoten (12, 30) in dem Cluster (10) ausgefallen ist;
Konfigurieren (120) des Standby-Knotens (14, 30) so, dass er eine Internetprotokolladresse, IP-Adresse, des ausgefallenen primären Knotens (12, 30) verwendet, umfassend:
- Konfigurieren einer Netzwerkschnittstelle (32) des Standby-Knotens (14, 30) so, dass sie die IP-Adresse des ausgefallenen primären Knotens (12, 30) verwendet; und
- Ankündigen einer Bindung zwischen der IP-Adresse und einer Medium Access Control-Adresse, MAC-Adresse, des Standby-Knotens (14, 30);
Abrufen (130) von Sitzungsdaten für Benutzersitzungen, die mit dem ausgefallenen primären Knoten (12, 30) assoziiert sind, aus einer Datenbank (20) mit geringer Latenz für den Cluster (10);
Wiederherstellen (140) der Benutzersitzung am Standby-Knoten (14, 30); und
Umschalten (150) von einem Standby-Modus in einen aktiven Modus.

2. Verfahren (100) nach Anspruch 1, wobei:
dass Bestimmen (110), dass der primäre Knoten (12, 30) in einem Cluster (10) ausgefallen ist, ein Senden einer periodischen Aufrechterhaltungsnachricht an einen oder mehrere primäre Knoten (12, 30) in dem Cluster (10) und Bestimmen eines Knotenausfalls umfasst, wenn der ausgefallene primäre Knoten (12, 30) auf eine Aufrechterhaltungsnachricht nicht antwortet.

3. Verfahren (100) nach Anspruch 1, wobei:
das Bestimmen (110), dass ein primärer Knoten (12, 30) in einem Cluster (10) ausgefallen ist, ein Empfangen einer Ausfallsbenachrichtigung umfasst.

4. Verfahren (100) nach Anspruch 3, wobei die Ausfallsbenachrichtigung von der externen Datenbank (20) empfangen wird.

5. Verfahren (100) nach einem der Ansprüche 1 bis 4, ferner umfassend ein Setzen eines Standby-Identitätsschlüssels in der Datenbank (20) auf eine Identität des ausgefallenen primären Knotens (12, 30).

6. Verfahren (100) nach einem der Ansprüche 1 bis 5, ferner umfassend:
nach dem Ende einer letzten der Benutzersitzungen: Freigeben der IP-Adresse des ausgefallenen primären Knotens (12, 30); und Umschalten vom aktiven Modus in den Standby-Modus; oder
bei Ablauf eines Standby-Zeitgebers: Freigeben der IP-Adresse des ausgefallenen primären Knotens (12, 30); und Umschalten vom aktiven Modus in den Standby-Modus.

7. Verfahren (100) nach einem der Ansprüche 1 bis 5, ferner umfassend:
Benachrichtigen eines Orchestrators (18), dass der Standby-Knoten (14, 30) den ausgefallenen primären Knoten (12, 30) ersetzt hat; und Empfangen neuer Benutzersitzungen von einem Lastausgleichsknoten (916) .

8. Verfahren (100) nach Anspruch 6, ferner umfassend ein Löschen des Standby-Identitätsschlüssels in der Datenbank (20) nach dem Ende einer letzten der Benutzersitzungen oder bei Ablauf eines Standby-Zeitgebers.

9. Netzwerkknoten (14, 30) zum Bereitstellen von N+1-Redundanz für eine Mehrzahl von primären Knoten (12, 30) in einem Cluster (10), der einen Standby-Knoten (14, 30) und eine Mehrzahl von primären Knoten (12, 30) umfasst, wobei der Netzwerkknoten (14, 30) der Standby-Knoten (14, 30) ist und umfasst:
eine Netzwerkschnittstelle (32), die zum Ausführen aller Schritte eines Verfahrens nach einem der Ansprüche 1 bis 8 konfiguriert ist.

10. Nicht-transitorisches computerlesbares Speichermedium, das ein Computerprogramm mit ausführbaren Anweisungen enthält, die bei Ausführung durch eine Verarbeitungsschaltung (34) in einem Netzwerkknoten den Netzwerkknoten zum Durchführen eines der Verfahren nach Anspruch 1 bis 8 veranlassen.

## Revendications

1. Procédé (100) de fourniture de redondance N+1 pour une grappe (10) de noeuds de réseau comprenant un noeud de secours (14, 30) et une pluralité de noeuds primaires (12, 30), le procédé (100) étant réalisé par le noeud de secours (14, 30) et comprenant :
la détermination (110), par le noeud de secours (14, 30), que l'un des noeuds primaires (12, 30) dans la grappe (10) est défaillant ;
la configuration (120) du noeud de secours (14, 30) pour utiliser une adresse de protocole Internet, IP, du noeud primaire (12, 30) défaillant, comprenant :
- la configuration d'une interface de réseau (32) du noeud de secours (14, 30) pour utiliser l'adresse IP du noeud primaire (12, 30) défaillant ; et
- l'annonce d'une liaison entre l'adresse IP et une adresse de commande d'accès au support, MAC, du noeud de secours (14, 30) ;
la récupération (130), depuis une base de données de faible latence (20) pour la grappe (10), de données de session pour des sessions d'utilisateur associées au noeud primaire (12, 30) défaillant ;
le rétablissement (140) des sessions d'utilisateur au niveau du noeud de secours (14, 30) ; et
la commutation (150) d'un mode de secours à un mode actif.

2. Procédé (100) selon la revendication 1, dans lequel :
la détermination (110) qu'un noeud primaire (12, 30) dans une grappe (10) est défaillant comprend l'envoi d'un message keepalive périodique à un ou plusieurs noeuds primaires (12, 30) dans la grappe (10) ; et la détermination d'une défaillance de noeud lorsque le noeud primaire (12, 30) défaillant ne parvient pas à répondre à un message keepalive.

3. Procédé (100) selon la revendication 1, dans lequel :
la détermination (110) qu'un noeud primaire (12, 30) dans une grappe (10) est défaillant comprend la réception d'une notification de défaillance.

4. Procédé (100) selon la revendication 3, dans lequel la notification de défaillance est reçue depuis la base de données externe (20).

5. Procédé (100) selon l'une quelconque des revendications 1 à 4, comprenant en outre le réglage d'une clé d'identité de secours dans la base de données (20) à une identité du noeud primaire (12, 30) défaillant.

6. Procédé (100) selon l'une quelconque des revendications 1 à 5, comprenant en outre :
après qu'une dernière des sessions d'utilisateur se termine : la libération de l'adresse IP du noeud primaire (12, 30) défaillant ; et la commutation du mode actif au mode de secours ; ou
à l'expiration d'une minuterie de secours : la libération de l'adresse IP du noeud primaire (12, 30) défaillant ; et la commutation du mode actif au mode de secours.

7. Procédé (100) selon l'une quelconque des revendications 1 à 5, comprenant en outre :
la notification d'un orchestrateur (18) que le noeud de secours (14, 30) a remplacé le noeud primaire (12, 30) défaillant ; et la réception de nouvelles sessions d'utilisateur depuis un noeud à équilibrage de charge (916) .

8. Procédé (100) selon la revendication 6, comprenant en outre, après qu'une dernière des sessions d'utilisateur se termine ou à l'expiration d'une minuterie de secours, l'effacement de la clé d'identité de secours dans la base de données (20).

9. Noeud de réseau (14, 30) de fourniture de protection N+1 pour une pluralité de noeuds primaires (12, 30) dans une grappe (10) comprenant un noeud de secours (14, 30) et une pluralité de noeuds primaires (12, 30), le noeud de réseau (14, 30) étant le noeud de veille (14, 30) et comprenant :
une interface de réseau (32) configurée pour réaliser toutes les étapes d'un procédé selon l'une quelconque des revendications 1 à 8.

10. Support de stockage non transitoire lisible par ordinateur contenant un programme informatique comprenant des instructions exécutables qui, lorsqu'elles sont exécutées par un circuit de traitement (34) dans un noeud de réseau d'un réseau mobile, amènent le noeud de réseau à réaliser l'un quelconque des procédés des revendications 1 à 8.
